# EUROPEAN PATENT APPLICATION

(11) **EP 2 706 788 A1**
(43) Date of publication of application: **12.03.2014**
(21) Application number: 11864912.8
(22) Date of filing: 06.05.2011
(51) Int. Cl.: H04W 48/12, H04B 7/04

(54) **TRANSMISSION MODE CONFIGURATION METHOD, USER EQUIPMENT AND BASE STATION THEREOF**

(71) Applicant: Fujitsu Limited, Kawasaki-shi, Kanagawa 211-8588 (JP)
(72) Inventor: ZHANG, Yuantao, Beijing 100025 (CN); WANG, Yi, Beijing 100025 (CN); ZHANG, Yi, Beijing 100025 (CN); ZHOU, Hua, Beijing 100025 (CN); WU, Jianming, Beijing 100025 (CN)
(74) Representative: Ward, James Norman
(86) International application number: PCT/CN2011/073760
(87) International publication number: WO 2012/151735

(57) **Abstract**

Embodiments of the present invention provide method for configuring a transmission mode, user equipment and a base station. The method includes: receiving, by the user equipment, a higher layer signaling transmitted by the base station, the higher layer signaling containing information instructing the user equipment to configure a transmission mode; and configuring the transmission mode for the user equipment according to the information, the transmission mode being based on a CRS or a DM-RS. With the embodiments of the present invention, reusable bandwidth resources may be increased.

## Description

### Technical Field

The present invention relates to the field of communications, and in particular to a method for configuring a transmission mode, user equipment and a base station.

### Background

Long-term evolution (LTE) system Rel.8/9 defines transmission modes 1-8, each of which is corresponding to different scheduling signaling, i.e. downlink control information (DCI) formats. For example, a transmission mode 2 denotes a transmit diversity mode, and corresponds to a DCI format 1; a transmission mode 3 denotes an open-loop multiple input multiple output (MIMO) mode, and corresponds to a DCI format 2A; and a transmission mode 4 denotes a close-loop MIMO mode, and corresponds to a DCI format 2.

User equipment configured with transmission modes 1-8 uses a common reference symbol (CRS) for a channel estimation, so as to perform a channel state information estimation and data demodulation. In order to increase reliability of information transmission, the system supports each of the transmission modes to have a corresponding fallback mode; for example, the fallback modes of transmission modes 2/3/4 are all transmit diversity, corresponding to a DCI format 1A.

A system of LTE Rel.10 and higher versions defines a new transmission mode 9 for close-loop MIMO, and its corresponding transmission mode is also close-loop MIMO, which uses a DCI format 2C; and its fallback mode is also transmit diversity, corresponding to the DCI format 1A.

The difference between transmission mode 4 of close-loop MIMO of LTE Rel.8/9 and the transmission mode 9 of close-loop MIMO of LTE Rel.10 and higher versions exists in that the former supports at most 4 downlink transmission antennas, and the user equipment configured with such a transmission mode uses a CRS for channel estimation, so as to perform channel information measurement and decoding. While the latter supports at most 8 downlink transmission antennas, and the user equipment configured with such a transmission mode uses a specific channel state information reference symbol (CSI-RS) for channel estimation, so as to perform channel information measurement, the antenna ports to which the CSI-RS correspond being 15-22; and a specific demodulation reference symbol (DM-RS) is used for channel estimation, so as to assist the decoding, the antenna ports to which the DM-RS correspond being 7-14.

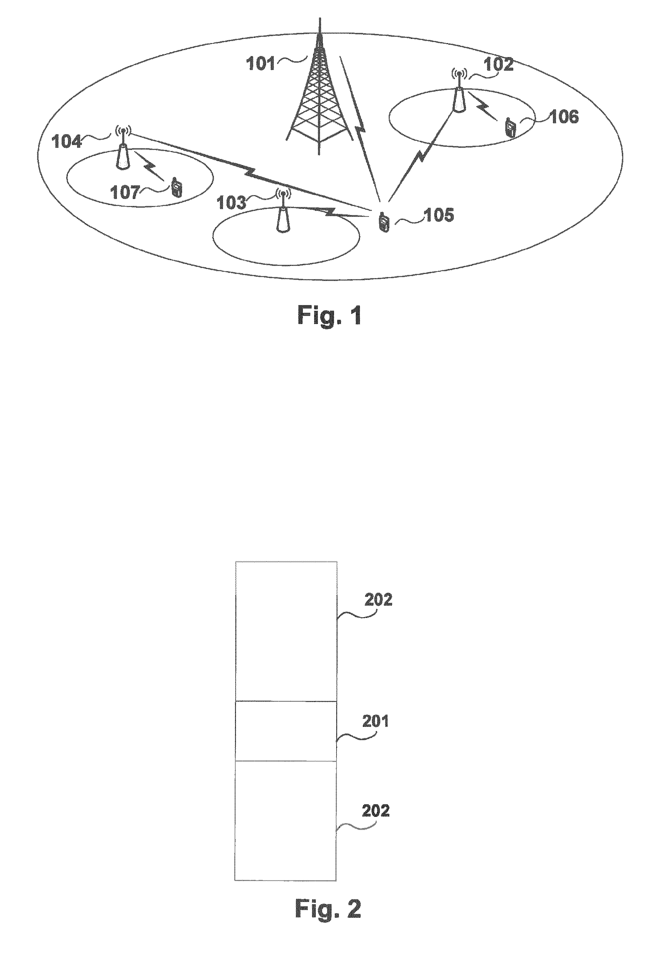

Figure 1 is a schematic diagram of a typical scenario of supporting a coordinated multi-point transmission mode in LTE Rel.11. As shown in Fig. 1, a system contains a macro point 101 and radio remote heads (RRHs) 102, 103 and 104. The macro point is one of high power, and the RRHs are points of low power. The coverage of the RRHs is contained in the coverage of the macro point, and most of the RRHs are arranged in hot-spot areas with relatively more users. User equipment in the coverage of the macro point shares the same cell ID with the user equipment in the coverage of the RRHs, with one of the brought results being that the macro point and the RRHs transmit the same CRSs at the same time-frequency positions.

In such a scenario, user equipment 105 may be LTE Rel.8 user equipment configured with transmission mode 3 based on CRS. When a CRS is used for channel estimation, combined channels from the macro point and all the RRHs are measured. In order that signal detection is not affected, that is, the transmitted signals are compatible with corresponding channel estimation, the macro point and all the RRHs transmit data signals for such type of user equipment on the same time-frequency resources.

In such a scenario, user equipment 106 and 107 may be LTE Rel.11 user equipment configured with transmission mode 9. As a CSI-RS and a DM-RS are specific reference signals, if different CSI-RSs are configured for each RRH, each RRH may transmit data at the same time-frequency locations respectively for the user equipment within its coverage, and such type of user equipment uses the DM-RS for demodulation.

However, in the implementation of the present invention, the inventors found following defect exists in the relevant art: if user equipment of LTE Rel.11 is configured with the transmission mode based on the CRS, it will occupy data resources with user equipment of LTE Rel.8/9 for data transmission, thereby lowering the throughput of the system.

Furthermore, user equipment configured with the transmission mode 9 performs a channel estimation based on the CSI-RS and the DM-RS, and its fallback mode is transmit diversity, the transmission mode of the transmit diversity performing channel estimation based on CRS. In such a case, if multiple pieces of user equipment configured with transmission mode 9 within the coverage of multiple RRHs share the same time-frequency resource for data transmission, and one piece of them needs to be configured with a fallback mode, other user equipment shall not be able to transmit data on the time-frequency resource.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary

Embodiments of the present invention provide a method for configuring a transmission mode, user equipment and a base station, with an aspect being to increase reusable bandwidth resources.

According to an aspect of the embodiments of the present invention, there is provided a method for configuring a transmission mode, which is applicable to a communication system in which a base station and a radio remote head serve for user equipment, the method including:
receiving, by the user equipment, a higher layer signaling transmitted by the base station, the higher layer signaling containing information instructing the user equipment to configure a transmission mode; and
configuring the transmission mode for the user equipment according to the information, the transmission mode being based on a CRS or a DM-RS.

According to another aspect of the embodiments of the present invention, there is provided a method for configuring a transmission mode, which is applicable to a communication system in which a base station and a radio remote head serve for user equipment, the method including:
transmitting, by the base station, a higher layer signaling to the user equipment, the higher layer signaling containing information instructing the user equipment to configure a transmission mode.

According to still another aspect of the embodiments of the present invention, there is provided a method for configuring a transmission mode, which is applicable to a communication system in which a base station and a radio remote head serve for user equipment, the method including:
receiving, by the user equipment, downlink control information transmitted by the base station, the downlink control information including a field indicative of a DM-RS; and
configuring a transmission mode for the user equipment according to the downlink control information, the transmission mode being based on the DM-RS.

According to still another aspect of the embodiments of the present invention, there is provided a method for configuring a transmission mode, which is applicable to a communication system in which a base station and a radio remote head serve for user equipment, the method including:
transmitting, by the base station, downlink control information to the user equipment, the downlink control information including a field indicative of a DM-RS.

According to still another aspect of the embodiments of the present invention, there is provided user equipment, including:
a signaling receiver, configured to receive a higher layer signaling transmitted by a base station, the higher layer signaling containing information instructing the user equipment to configure a transmission mode; and
a first configurator, configured to configure the transmission mode according to the information, the transmission mode being based on a CRS or a DM-RS.

According to still another aspect of the embodiments of the present invention, there is provided a base station, including:
a signaling transmitter, configured to transmit a higher layer signaling to user equipment, the higher layer signaling containing information instructing the user equipment to configure a transmission mode.

According to still another aspect of the embodiments of the present invention, there is provided user equipment, including:
an information receiver, configured to receive downlink control information transmitted by a base station, the downlink control information including a field indicative of a DM-RS; and
a second configurator, configured to configure a transmission mode for the user equipment according to the downlink control information, the transmission mode being based on the DM-RS.

According to still another aspect of the embodiments of the present invention, there is provided a base station, including:
an information transmitter, configured to transmit downlink control information to the user equipment, the downlink control information including a field indicative of a DM-RS.

According to still another aspect of the embodiments of the present invention, there is provided a computer-readable program, wherein when the program is executed in user equipment, the program enables a computer to carry out the method for configuring a transmission mode as described above in the user equipment.

According to still another aspect of the embodiments of the present invention, there is provided a storage medium in which a computer-readable program is stored, wherein the computer-readable program enables a computer to carry out the method for configuring a transmission mode as described above in user equipment.

According to still another aspect of the embodiments of the present invention, there is provided a computer-readable program, wherein when the program is executed in a base station, the program enables a computer to carry out the method for configuring a transmission mode as described above in the base station.

According to still another aspect of the embodiments of the present invention, there is provided a storage medium in which a computer-readable program is stored, wherein the computer-readable program enables a computer to carry out the method for configuring a transmission mode as described above in a base station.

The advantages of the embodiments of the present invention exist in that reusable resources may be increased by using signaling notification to configure a transmission mode or defining a new transmission mode, so that user equipment is able to transmit data on the reusable resources even if it is configured with a non-closed loop MIMO transmission mode.

Furthermore, if multiple pieces of user equipment share the same time-frequency resource for data transmission, and one piece of them needs to be configured with a fallback mode, other user equipment is also able to transmit data on the time-frequency resource.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Many aspects of the present invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be enlarged or reduced.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of a typical scenario of supporting a coordinated multi-point transmission mode in LTE Rel.11;
Figure 2 is a schematic diagram of composition of system resources;
Figure 3 is a flowchart of the method for configuring a transmission mode of an embodiment of the present invention;
Figure 4 is a schematic diagram of the structure of the user equipment of an embodiment of the present invention;
Figure 5 is another flowchart of the method for configuring a transmission mode of an embodiment of the present invention;
Figure 6 is another schematic diagram of the structure of the user equipment of an embodiment of the present invention;
Figure 7 is systematic structural view of the user equipment of an embodiment of the present invention; and
Figure 8 is another systematic structural view of the user equipment of an embodiment of the present invention.

### Detailed Description

The foregoing and other features of the embodiments of the present invention will become apparent with reference to the drawings and the following description. In the description and drawings, particular embodiments of the present invention are disclosed, which show some embodiments in which the principle of the present invention may be employed. It should be understood that the present invention is not limited to the described embodiments, on the contrary, the present invention includes all the modifications, variants and the equivalents thereof falling within the scope of the appending claims.

The embodiments of the present invention are applicable to a communication system in which a base station and a radio remote head serve for user equipment. The system may be an LTE system; however, it is not limited thereto. In this embodiment, the resources of the system may be divided into two types: the first type is unreusable resources, which are allocated to a mobile station configured with a transmission mode based on CRS; and the second type is reusable resources, which are allocated to a mobile station configured with a transmission mode based on CSI-RS and DM-RS.

Figure 2 is a schematic diagram of composition of system resources. As shown in Fig. 2, reusable bandwidth resources 202 are the whole bandwidth resources subtracted by bandwidth resources 201 occupied by a transmission mode based on CRS. The aspect of the present invention is to increase reusable bandwidth resources.

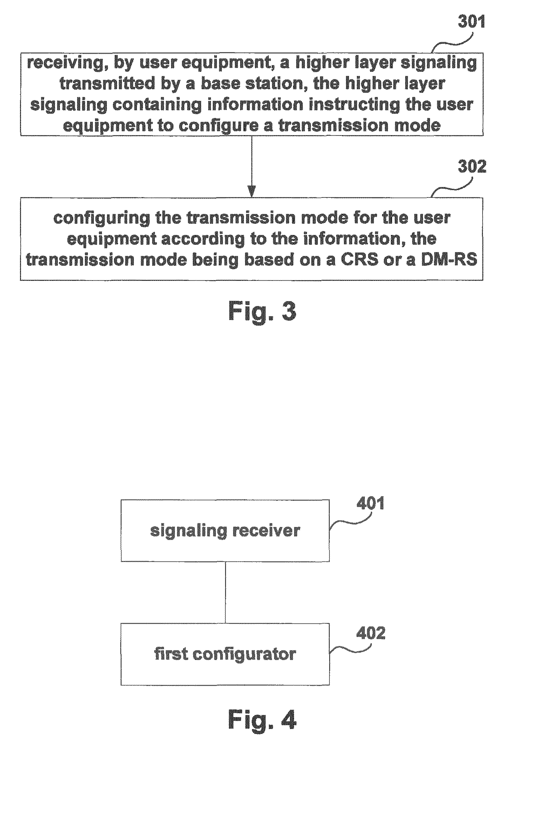

An embodiment of the present invention provides a method for configuring a transmission mode, which is applicable to a communication system in which a base station and a radio remote head serve for user equipment. Fig. 3 is a flowchart of the method for configuring a transmission mode of the embodiment of the present invention.

As shown in Fig. 3, at the user equipment side, the method includes:
step 301: receiving, by the user equipment, a higher layer signaling transmitted by the base station, the higher layer signaling containing information instructing the user equipment to configure a transmission mode; and
step 302: configuring the transmission mode for the user equipment according to the information, the transmission mode being based on a CRS or a DM-RS.

In this embodiment, the user equipment may be one of LTE Rel.11 and higher versions, and the base station may be a macro base station. The higher layer signaling may be an upper-layer medium access control (MAC) signaling, or a radio resource control (RRC) signaling.

In an embodiment, the user equipment is configured by the base station as closed loop MIMO not based on transmission mode 9, and the transmission mode includes: estimating channel state information and demodulating data based on the CRS; or estimating channel state information based on a CSI-RS and demodulating data based on a DM-RS.

For example, the base station may transmit a higher layer signaling to the user equipment, the higher layer signaling containing information instructing the user equipment to configure a transmission mode, which may be, for example, 1 bit.

When the bit value is 0 (or 1), the transmission mode may be based on CRS, that is, the user equipment may perform channel estimation by using the CRS, so as to estimate channel state information and perform data demodulation.

And when the bit value is 1 (or 0), the transmission mode may be based on CSI-RS for channel estimation, so as to estimate channel state information, and perform channel estimation based on the DM-RS, so as to perform data demodulation. In particular implementation, the user equipment needs information on antenna ports received the DM-RS.

In another embodiment, the transmission mode of the user equipment is configured by the base station as a closed loop MIMO based on transmission mode 9, and the method may further include: configuring the fallback mode of transmission mode 9, wherein the fallback mode includes estimating channel state information and demodulating data based on the CRS, or estimating channel state information based on a CSI-RS and demodulating data based on a DM-RS.

For example, the base station may transmit a higher layer signaling to the user equipment, the higher layer signaling containing information instructing the user equipment to configure a transmission mode, which may be, for example, 1 bit.

When the bit value is 0 (or 1), the fallback mode of the transmission mode 9, i.e. the transmission mode of the transmit diversity, may be based on CRS, that is, the user equipment may perform channel estimation by using the CRS, so as to estimate channel state information and perform data demodulation.

And when the bit value is 1 (or 0), the fallback mode of the transmission mode 9, i.e. the transmission mode of the transmit diversity, may be based on CSI-RS for channel estimation, so as to estimate channel state information, and perform channel estimation based on the DM-RS, so as to perform data demodulation.

In this embodiment, if it is configured as being based on DM-RS, both of the base station and the user equipment may learn the position of the DM-RS, and the relevant art may be used, which shall not be described herein any further. What is described above for configuring a transmission mode by using a higher layer signaling is illustrative only. However, it is not limited thereto, and a particular mode of implementation may be determined as actually required.

An embodiment of the present invention further provides user equipment. Fig. 4 is a schematic diagram of the structure of the user equipment of the embodiment of the present invention. As shown in Fig. 4, the user equipment includes: a signaling receiver 401 and a first configurator 402; wherein,
the signaling receiver 401 is configured to receive a higher layer signaling transmitted by a base station, the higher layer signaling containing information instructing the user equipment to configure a transmission mode;
and the first configurator 402 is configured to configure a transmission mode according to the information, the transmission mode being based on a CRS or a DM-RS.

In particular, in an embodiment, the transmission mode of the user equipment is configured as a closed loop MIMO mode not based on the transmission mode 9, and the transmission mode may include: estimating channel state information and demodulating data based on the CRS, or estimating channel state information based on a CSI-RS and demodulating data based on a DM-RS.

In particular, in another embodiment, the transmission mode of the user equipment is configured as a closed loop MIMO mode based on the transmission mode 9, the first configurator 402 is further configured to configure the fallback mode of the transmission mode 9;
wherein the fallback mode includes: estimating channel state information and demodulating data based on the CRS, or estimating channel state information based on a CSI-RS and demodulating data based on a DM-RS.

An embodiment of the present invention further provides a method for configuring a transmission mode, which is applicable to a communication system in which a base station and a radio remote head serve for user equipment.

At the base station side, the method includes: transmitting, by the base station, a higher layer signaling to the user equipment, the higher layer signaling containing information instructing the user equipment to configure a transmission mode.

An embodiment of the present invention further provides a base station, including: a signaling transmitter, configured to transmit a higher layer signaling to user equipment, the higher layer signaling containing information instructing the user equipment to configure a transmission mode.

It can be seen from above that reusable resources may be increased by configuring a transmission mode by using a higher layer signaling, so that user equipment is able to transmit data on the reusable resources even if it is configured with a non-closed loop transmission mode.

Furthermore, if multiple pieces of user equipment share the same time-frequency resource for data transmission, and one piece of them needs to be configured with a fallback mode, other user equipment is also able to transmit data on the time-frequency resource.

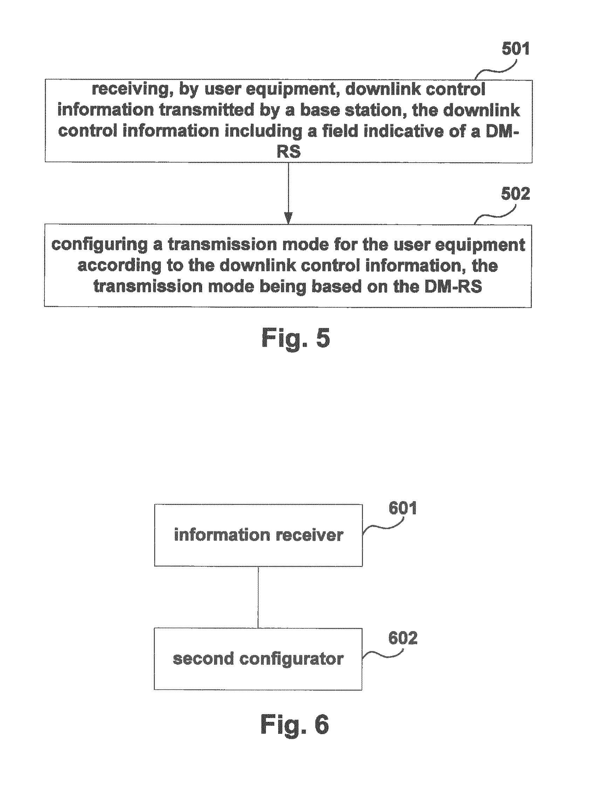

An embodiment of the present invention further provides a method for configuring a transmission mode, which is applicable to a communication system in which a base station and a radio remote head serve for user equipment. Fig. 5 is another flowchart of the method for configuring a transmission mode of the embodiment of the present invention.

As shown in Fig. 5, at the user equipment side, the method includes:
step 501: receiving, by the user equipment, downlink control information transmitted by the base station, the downlink control information including a field indicative of a DM-RS; and
step 502: configuring a transmission mode for the user equipment according to the downlink control information, the transmission mode being based on the DM-RS.

In this embodiment, the user equipment may be one of LTE Rel.11 and higher versions, and the base station may be a macro base station. The base station defines a new transmission mode for the user equipment, and a field indicative of a DM-RS is added into a corresponding DCI. Therefore, channel estimation based on the CSI-RS is supported, so as to estimate channel state information, and channel estimation is performed based on a DM-RS, so as to perform data demodulation.

In an embodiment, the user equipment is configured as open loop MIMO. The base station may define a new transmission mode 10 of transmit diversity, the transmission mode including: adopting antenna ports 7 and 8 by the DM-RS if the transmit diversity uses two antennas; and adopting antenna ports 7-10, i.e. 7, 8, 9 and 10, by the DM-RS, if the transmit diversity uses four antennas.

In another embodiment, the user equipment is configured as open loop MIMO, and the base station may define a new transmission mode 11 of transmit diversity. Table 1 shows a schematic diagram of the transmission mode:

**Table 1**

| One encoded codeword | | Two encoded codewords | |
|---|---|---|---|
| Index | Message | Index | Message |
| 0 | 4 data stream transmit diversity, antenna ports 7-10 | 0 | 2 data stream open loop MIMO, antenna ports 7-8 |
| 1 | 2 data stream open loop MIMO, antenna ports 7-8 | 1 | 3 data stream open loop MIMO, antenna ports 7-9 |
| 2 | reserved | 2 | 4 data stream open loop MIMO, antenna ports 7-10 |
| 3 | reserved | 3 | reserved |

As shown in Table 1, if the field added into the corresponding DCI is one encoded codeword, the transmission mode may specifically include: adopting antenna ports 7 and 8 by the DM-RS if the transmit diversity uses two data steams; and adopting antenna ports 7-10 by the DM-RS if the transmit diversity uses four data steams.

And if the field added into the corresponding DCI is two encoded codewords, the transmission mode may specifically include: adopting antenna ports 7 and 8 by the DM-RS if the transmit diversity uses two data steams; adopting antenna ports 7-9 by the DM-RS if the transmit diversity uses three data steams; and adopting antenna ports 7-10 by the DM-RS if the transmit diversity uses four data steams.

In another embodiment, the user equipment is configured as closed loop MIMO based on transmission mode 9, and the method further includes: configuring a fallback mode of transmission mode 9, wherein, the fallback mode uses above transmission mode 10, that is, it may include: adopting antenna ports 7 and 8 by the DM-RS if the transmit diversity uses two antennas; and adopting antenna ports 7-10 by the DM-RS if the transmit diversity uses four antennas.

What is described above for defining a new transmission mode is illustrative only. However, it is not limited thereto, and a particular mode of implementation may be determined as actually required.

An embodiment of the present invention further provides user equipment. Fig. 6 is another schematic diagram of the structure of the user equipment of the embodiment of the present invention. As shown in Fig. 6, the user equipment includes: an information receiver 601 and a second configurator 602; wherein,
the information receiver 601 is configured to receive downlink control information transmitted by a base station, the downlink control information including a field indicative of a DM-RS;
and the second configurator 602 is configured to configure a transmission mode for the user equipment according to the downlink control information, the transmission mode being based on the DM-RS.

In particular, in an embodiment, the user equipment is configured as open loop MIMO, and the base station may define a new transmission mode 10 of transmit diversity, the transmission mode specifically including: adopting antenna ports 7 and 8 by the DM-RS if the transmit diversity uses two antennas; and adopting antenna ports 7-10 by the DM-RS if the transmit diversity uses four antennas.

In particular, in another embodiment, the user equipment is configured as open loop MIMO, and the base station may define a new transmission mode 11 of transmit diversity. If the field is one encoded codeword, the transmission mode may specifically include: adopting antenna ports 7 and 8 by the DM-RS if the transmit diversity uses two data steams; and adopting antenna ports 7-10 by the DM-RS if the transmit diversity uses four data steam.

In particular, in another embodiment, the user equipment is configured as open loop MIMO, and the base station may define a new transmission mode 11 of transmit diversity. If the field is two encoded codewords, the transmission mode may specifically include: adopting antenna ports 7 and 8 by the DM-RS if the transmit diversity uses two data steams; adopting antenna ports 7-9 by the DM-RS if the transmit diversity uses three data steam; and adopting antenna ports 7-10 by the DM-RS if the transmit diversity uses four data steam.

In particular, in another embodiment, the user equipment is configured as closed loop MIMO based on transmission mode 9, and the second configurator 602 is further configured to configure a fallback mode of transmission mode 9, wherein, the fallback includes: adopting antenna ports 7 and 8 by the DM-RS if the transmit diversity uses two antennas; and adopting antenna ports 7-10 by the DM-RS if the transmit diversity uses four antennas.

An embodiment of the present invention further provides a method for configuring a transmission mode, which is applicable to a communication system in which a base station and a radio remote head serve for user equipment.

At the base station side, the method includes: transmitting downlink control information by the base station to the user equipment, the downlink control information including a field indicative of a DM-RS.

An embodiment of the present invention further provides a base station, including: an information transmitter, configured to transmit downlink control information to the user equipment, the downlink control information including a field indicative of a DM-RS.

It can be seen from above that reusable resources may be increased by defining a new transmission mode, so that user equipment is able to transmit data on the reusable resource even if it is configured with a non-closed loop MIMO transmission mode.

Furthermore, if multiple pieces of user equipment share the same time-frequency resource for data transmission, and one piece of them needs to be configured with a fallback mode, other user equipment is also able to transmit data on the time-frequency resource.

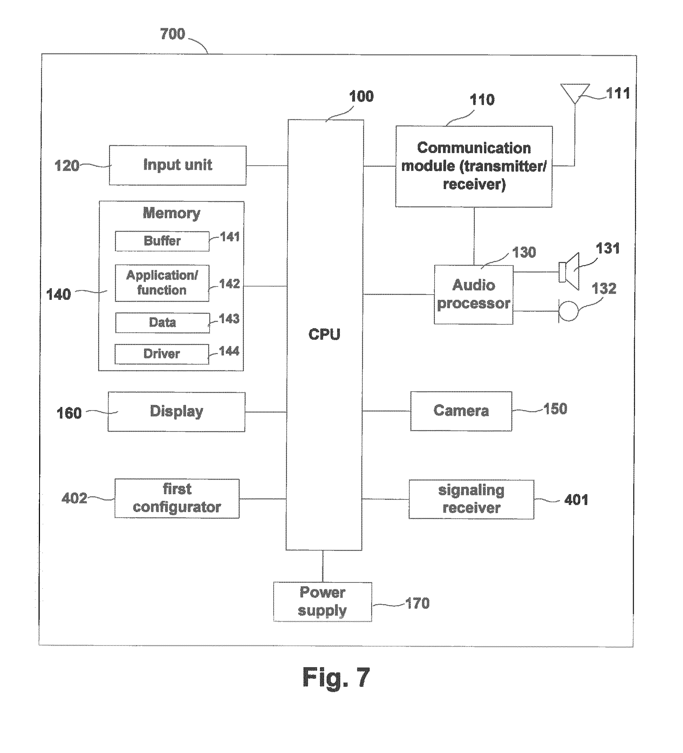

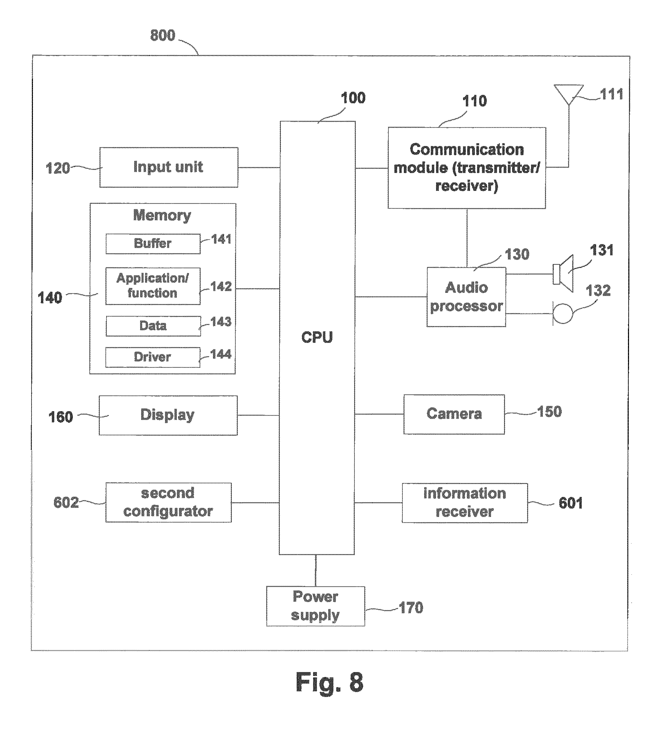

Figure 7 is systematic structural view of the user equipment 700 of an embodiment of the present invention, which includes the above-described signaling receiver 401 and the first configurator 402. Figure 8 is another systematic structural view of the user equipment 800 of the embodiment of the present invention, which includes the above-described information receiver 601 and the second configurator 602.

Figs. 7 and 8 are illustrative only, and other types of structures may also be used for supplementing or replacing this structure, so as to implement the function of telecommunications or other functions.

As shown in Figs. 7 and 8, the user equipment 700 and 800 may further include a CPU 100, a communication module 110, an input unit 120, an audio processing unit 130, a memory 140, a camera 150, a display 160, and a power supply 170.

The CPU 100 (also referred to as a controller or an operational control, which may include a microprocessor or other processing devices and/or logic devices) receives input and controls each part and operation of the user equipment. The input unit 120 provides input to the CPU 100. The input unit 120 may be for example a key or touch input device. The camera 150 is used to take image data and provide the taken image data to the CPU 100 for use in a conventional manner, for example, for storage, and transmission, etc.

The power supply 170 is used to supply power to the user equipment. And the display 160 is used to display the objects of display, such as images, and characters, etc. The display may be for example an LCD display, but it is not limited thereto.

The memory 140 is coupled to the CPU 100. The memory 140 may be a solid memory, such as a read-only memory (ROM), a random access memory (RAM), and a SIM card, etc., and may also be such a memory that stores information when the power is interrupted, may be optionally erased and provided with more data. Examples of such a memory are sometimes referred to as an EPROM, etc. The memory 140 may also be certain other types of devices. The memory 140 includes a buffer memory 141 (sometimes referred to as a buffer). The memory 140 may include an application/function storing portion 142 used to store application programs and function programs, or to execute the flow of the operation of the user equipment via the CPU 100.

The memory 140 may further include a data storing portion 143 used to store data, such as a contact person, digital data, pictures, voices and/or any other data used by the user equipment. A driver storing portion 144 of the memory 140 may include various types of drivers of the user equipment for the communication function and/or for executing other functions (such as application of message transmission, and application of directory, etc.) of the user equipment.

The communication module 110 is a transmitter/receiver 110 transmitting and receiving signals via an antenna 111. The communication module (transmitter/receiver) 110 is coupled to the CPU 100 to provide input signals and receive output signals, this being similar to the case in a conventional mobile phone.

A plurality of communication modules 110 may be provided in the same user equipment for various communication technologies, such a cellular network module, a Bluetooth module, and/or wireless local network module, etc. The communication module (transmitter/receiver) 110 is also coupled to a loudspeaker 131 and a microphone 132 via the audio processing unit 130, for providing audio output via the loudspeaker 131 and receiving the audio input from the microphone 132, thereby achieving common telecommunications function. The audio processing unit 130 is further coupled to the CPU 100, thereby enabling the recording of voices in this device via the microphone 132 and playing the voices stored in this device via the loudspeaker 131.

An embodiment of the present invention further provides a computer-readable program, wherein when the program is executed in user equipment, the program enables a computer to carry out the method for configuring a transmission mode as described above in the user equipment.

An embodiment of the present invention further provides a storage medium in which a computer-readable program is stored, wherein the computer-readable program enables a computer to carry out the method for configuring a transmission mode as described above in user equipment.

An embodiment of the present invention further provides a computer-readable program, wherein when the program is executed in a base station, the program enables a computer to carry out the method for configuring a transmission mode as described above in the base station.

An embodiment of the present invention further provides a storage medium in which a computer-readable program is stored, wherein the computer-readable program enables a computer to carry out the method for configuring a transmission mode as described above in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for configuring a transmission mode, which is applicable to a communication system in which a base station and a radio remote head serve for user equipment, the method comprising:
receiving, by the user equipment, a higher layer signaling transmitted by the base station, the higher layer signaling containing information instructing the user equipment to configure a transmission mode; and
configuring the transmission mode for the user equipment according to the information, the transmission mode being based on a common reference symbol (CRS) or a demodulation reference symbol (DM-RS).

2. The method according to claim 1, wherein when the transmission mode of the user equipment is configured as a closed loop multiple input and multiple output (MIMO) mode not based on a transmission mode 9, the transmission mode is:
estimating channel state information and demodulating data based on the CRS, or estimating channel state information based on a channel state information reference symbol (CSI-RS) and demodulating data based on the DM-RS.

3. The method according to claim 1, wherein when the transmission mode of the user equipment is configured as a closed loop MIMO mode based on the transmission mode 9, the method further comprises:
configuring a fallback mode of the transmission mode 9;
wherein the fallback mode comprises estimating channel state information and demodulating data based on the CRS, or estimating channel state information based on a CSI-RS and demodulating data based on the DM-RS.

4. A method for configuring a transmission mode, which is applicable to a communication system in which a base station and a radio remote head serve for user equipment, the method comprising:
transmitting, by the base station, a higher layer signaling to the user equipment, the higher layer signaling containing information instructing the user equipment to configure a transmission mode.

5. A method for configuring a transmission mode, which is applicable to a communication system in which a base station and a radio remote head serve for user equipment, the method comprising:
receiving, by the user equipment, downlink control information transmitted by the base station, the downlink control information including a field indicative of a DM-RS; and
configuring a transmission mode for the user equipment according to the downlink control information, the transmission mode being based on the DM-RS.

6. The method according to claim 5, wherein when the transmission mode of the user equipment is configured as an open loop MIMO mode, the transmission mode comprises:
if two antennas are adopted for transmit diversity, the DM-RS adopts antenna ports 7 and 8, and if four antennas are adopted for transmit diversity, the DM-RS adopts antenna ports 7-10.

7. The method according to claim 5, wherein when the transmission mode of the user equipment is configured as an open loop MIMO mode and the field is one encoded codeword, the transmission mode comprises:
if two data streams are adopted for transmit diversity, the DM-RS adopts antenna ports 7 and 8, and if four data streams are adopted for transmit diversity, the DM-RS adopts antenna ports 7-10.

8. The method according to claim 5, wherein when the transmission mode of the user equipment is configured as an open loop MIMO mode and the field is two encoded codewords, the transmission mode comprises:
if two data streams are adopted for transmit diversity, the DM-RS adopts antenna ports 7 and 8, if three data streams are adopted for transmit diversity, the DM-RS adopts antenna ports 7-9, and if four data streams are adopted for transmit diversity, the DM-RS adopts antenna ports 7-10.

9. The method according to claim 5, wherein when the transmission mode of the user equipment is configured as a closed loop MIMO mode based on a transmission mode 9, the method further comprises:
configuring a fallback mode of the transmission mode 9;
wherein the fallback mode comprises if two antennas are adopted for transmit diversity, the DM-RS adopts antenna ports 7 and 8, and if four antennas are adopted for transmit diversity, the DM-RS adopts antenna ports 7-10.

10. A method for configuring a transmission mode, which is applicable to a communication system in which a base station and a radio remote head serve for user equipment, the method comprising:
transmitting, by the base station, downlink control information to the user equipment, the downlink control information including a field indicative of a DM-RS.

11. User equipment, comprising:
a signaling receiver, configured to receive a higher layer signaling transmitted by a base station, the higher layer signaling containing information instructing the user equipment to configure a transmission mode; and
a first configurator, configured to configure the transmission mode according to the information, the transmission mode being based on a CRS or a DM-RS.

12. The user equipment according to claim 11, wherein when the transmission mode of the user equipment is configured as a closed loop MIMO mode not based on a transmission mode 9, the transmission mode comprises:
estimating channel state information and demodulating data based on the CRS, or estimating channel state information based on a CSI-RS and demodulating data based on the DM-RS.

13. The user equipment according to claim 11, wherein when the transmission mode of the user equipment is configured as a closed loop MIMO mode based on a transmission mode 9, the first configurator is further configured to configure a fallback mode of the transmission mode 9;
wherein the fallback mode comprises: estimating channel state information and demodulating data based on the CRS, or estimating channel state information based on a CSI-RS and demodulating data based on the DM-RS.

14. A base station, comprising:
a signaling transmitter, configured to transmit a higher layer signaling to user equipment, the higher layer signaling containing information instructing the user equipment to configure a transmission mode.

15. User equipment, comprising:
an information receiver, configured to receive downlink control information transmitted by a base station, the downlink control information including a field indicative of a DM-RS; and
a second configurator, configured to configure a transmission mode for the user equipment according to the downlink control information, the transmission mode being based on the DM-RS.

16. The user equipment according to claim 15, wherein when the transmission mode of the user equipment is configured as an open loop MIMO mode, the transmission mode comprises:
if two antennas are adopted for transmit diversity, the DM-RS adopts antenna ports 7 and 8, and if four antennas are adopted for transmit diversity, the DM-RS adopts antenna ports 7-10.

17. The user equipment according to claim 15, wherein when the transmission mode of the user equipment is configured as an open loop MIMO mode and the field is one encoded codeword, the transmission mode comprises:
if two data streams are adopted for transmit diversity, the DM-RS adopts antenna ports 7 and 8, and if four data streams are adopted for transmit diversity, the DM-RS adopts antenna ports 7-10.

18. The user equipment according to claim 15, wherein when the transmission mode of the user equipment is configured as an open loop MIMO mode and the field is two encoded codewords, the transmission mode comprises:
if two data streams are adopted for transmit diversity, the DM-RS adopts antenna ports 7 and 8, if three data streams are adopted for transmit diversity, the DM-RS adopts antenna ports 7-9, and if four data streams are adopted for transmit diversity, the DM-RS adopts antenna ports 7-10.

19. The user equipment according to claim 15, wherein when the transmission mode of the user equipment is configured as a closed loop MIMO mode based on a transmission mode 9, the second configurator is further configured to configure a fallback mode of the transmission mode 9;
wherein the fallback mode comprises if two antennas are adopted for transmit diversity, the DM-RS adopts antenna ports 7 and 8, and if four antennas are adopted for transmit diversity, the DM-RS adopts antenna ports 7-10.

20. A base station, comprising:
an information transmitter, configured to transmit downlink control information to user equipment, the downlink control information including a field indicative of a DM-RS.

21. A computer-readable program, wherein when the program is executed in user equipment, the program enables a computer to carry out the method for configuring a transmission mode as claimed in any of claims 1-3 or 5-9 in the user equipment.

22. A storage medium in which a computer-readable program is stored, wherein the computer-readable program enables a computer to carry out the method for configuring a transmission mode as claimed in any of claims 1-3 or 5-9 in user equipment.

23. A computer-readable program, wherein when the program is executed in a base station, the program enables a computer to carry out the method for configuring a transmission mode as claimed in claim 4 or 10 in the base station.

24. A storage medium in which a computer-readable program is stored, wherein the computer-readable program enables a computer to carry out the method for configuring a transmission mode as claimed in claim 4 or 10 in a base station.
